# FASCICULE DE BREVET EUROPEEN

(11) **EP 0 459 898 B1**
(45) Date de publication et mention de la délivrance du brevet: **12.04.1995**
(21) Numéro de dépôt: 91401395.8
(22) Date de dépôt: 30.05.1991
(51) Int. Cl.: C03B 23/035

(54) **Procédé et dispositif de bombage de feuilles de verre**
Verfahren und Vorrichtung zum Biegen von Glasscheiben
Method and apparatus for bending sheets of glass

(30) Priorité: 01.06.1990 FR 9006842
(43) Date de publication de la demande: 04.12.1991
(73) Titulaire: SAINT-GOBAIN VITRAGE INTERNATIONAL, 92400 Courbevoie (FR)
(72) Inventeur: Petitcollin, Jean-Marc, F-60150 Thourotte (FR); Lesage, Jean-Luc, F-60200 Compiègne (FR); Borderiou, Arnaud, F-60200 Compiègne (FR)
(74) Mandataire: Menes, Catherine

(56) Documents cités:
- FR-A- 2 085 464
- US-A- 3 607 186

## Description

L'invention a trait aux techniques de production de vitrages bombés et éventuellement trempés généralement destinés à l'équipement de véhicules automobiles. Plus précisément, l'invention concerne celles de ces techniques dans lesquelles chaque feuille de verre est réchauffée en position horizontale jusqu'à l'obtention de sa température de bombage, est amenée au contact d'une forme supérieure de bombage par une force de nature pneumatique par exemple au moyen d'une aspiration, est formée par application contre cette forme supérieure de bombage et/ou au moyen d'une forme de bombage inférieure et/ou d'autres outils de bombage et subit enfin un refroidissement contrôlé par exemple du type trempe thermique.

Selon ces techniques, la feuille de verre traverse un four de réchauffage en étant convoyée par un lit de rouleaux moteurs qui la conduit dans une station de bombage. Dans celle-ci, la feuille de verre est soulevée au-dessus du lit de rouleaux par une force pneumatique. L'ascension de la feuille de verre s'achève au contact d'une forme supérieure de bombage dont elle épouse la courbure, le formage étant éventuellement complété par exemple par un formage par inertie et gravité dû à un lâcher sur une forme inférieure de bombage et/ou un pressage.

La force pneumatique agissant sur la feuille de verre est dans une première variante de ces techniques générée par une aspiration au travers de la forme supérieure munie dans ce but d'orifices de succion (EP-B-3 391). Mais si la dépression exercée est trop forte, ces orifices occasionnent un marquage de la feuille de verre ; or dès que la distance à parcourir par la feuille de verre s'accroît, il faut augmenter le niveau de la dépression pour réussir à provoquer l'envol du verre. En pratique, cette technique ne convient donc bien que dans la mesure où toute la face tournée vers le verre de la forme supérieure peut être descendue très près de la surface de la feuille de verre, ce qui suppose une forme plane ou à peine courbée.

Dans une seconde variante, connue notamment des brevets ou demandes de brevets FR-B-2 085 464, EP-A-240 418, EP-A-241 355 et EP-A-255 432, la force pneumatique agissant sur la feuille de verre est obtenue au moyen d'une aspiration périphérique. Cette technique de prise en charge de la feuille de verre est avantageusement polyvalente, c'est-à-dire qu'elle peut être mise en oeuvre avec un grand nombre de procédés de bombage tels par exemple les procédés opérant par lâcher sur un cadre ouvert en son centre, ou par déformation contre une forme supérieure de bombage et/ou par pressage. De plus, la qualité optique susceptible d'être ainsi obtenue est particulièrement grande car les contacts entre la feuille de verre et les outils de bombage sont relativement limités, la feuille de verre n'étant ni levée mécaniquement - du fait de l'aspiration périphérique - ni appliquée préférentiellement par sa partie centrale contre la forme supérieure de bombage ce qui évite la formation de défauts optiques dans cette zone. A cette qualité optique élevée s'ajoutent une simplicité des opérations de remplacement du revêtement couvrant la forme supérieure de bombage (qui n'a pas besoin d'être percés) et la possibilité de travailler avec une forme supérieure de bombage dont les dimensions sont inférieures à celles de la feuille de verre, de sorte que les éventuelles parties émaillées du vitrage ne soient pas en contact avec la forme supérieure de bombage.

Pour créer une différence de pression suffisante entre les deux faces de la feuille de verre, on constitue une chambre fermée en haut par la forme supérieure de bombage, en bas par la feuille de verre et sur les côtés par les parois latérales ou des portions de paroi d'un caisson sans fond encore appelé jupe, cette chambre étant dépressurisée par exemple par l'intermédiaire d'une trompe à air. Pour éviter le marquage du verre, cette jupe doit être légèrement écartée de la feuille de verre et il en résulte nécessairement une fuite qui ne peut être diminuée, même si la jupe est profilée. Mais cette fuite génère par définition une perte d'efficacité de l'aspiration et constitue la principale limitation à l'intensité de la force agissant sur la feuille de verre notamment à l'instant le plus critique du procédé, c'est-à-dire lors de l'envol de la feuille de verre.

Il a été proposé dans un premier temps, FR-B-2 085 464 d'employer des jupes profilées de manière à bien canaliser les fuites latérales et de descendre le plus bas possible la jupe lors de la prise en charge de la feuille de verre. Cette manière de faire n'est toutefois pas sans inconvénient : tout d'abord, elle nécessite un réglage très fin de la position en hauteur de la jupe, réglage rendu difficile par les phénomènes de dilatation des outils dus à la température élevée qui règne dans la station de bombage et néanmoins indispensable pour éviter que la jupe et/ou la forme de bombage ne viennent heurter et marquer la feuille de verre. De plus, la jupe gène lors du remplacement d'une forme de bombage ou du remplacement de l'intercalaire papier ou tissu utilisé pour revêtir la surface de contact de la forme supérieure avec le verre.

D'autre part, la pratique a montré qu'au-delà d'une certaine complexité des formes de vitrages, il n'est plus possible d'obtenir une parfaite application simplement par aspiration. Une des solutions déjà proposées pour ce problème est de compléter l'application pneumatique par un pressage mécanique au moyen d'un cadre de pressage mais alors la présence du bas de la jupe gène pour introduire ce cadre de pressage sous la feuille de verre et de plus la jupe entraîne un manque total de visibilité qui nuit beaucoup lors des réglages de la forme et/ou du temps de pressage. De plus le cadre de pressage et l'équipage qui lui est associé doivent être assez petits pour se loger sous la jupe ce qui interdit de fait un pressage par un cadre de trempe. Enfin dans le cas d'un lâcher sur un cadre de bombage et de trempe ouvert en son centre, la jupe impose une hauteur de chute relativement importante : l'effet d'inertie de la chute est de ce fait plus grand d'où un risque de double-bombage, c'est-à-dire d'obtention de courbures non souhaitées. Par ailleurs, plus la hauteur de chute est grande, plus les problèmes de retard de chute - dus notamment à des effets de collage des émaux - génèrent des difficultés par exemple liées au mauvais positionnement de la feuille de verre sur le cadre et surtout des défauts de galbe lorsque le vitrage ne retombe pas à plat, mais plus ou moins de travers.

Dans les demandes de brevet EP-A-241 355 et EP-A-240 418, il a été proposé d'opérer avec une jupe courte laissant apparente une partie de la forme de bombage. Cette solution permet d'obvier la plupart des inconvénients mentionnés plus haut, mais elle est essentiellement limitée à l'emploi de formes supérieures de bombage présentant une courbure peu prononcée faute de quoi l'aspiration initiale peut ne pas être suffisante pour faire décoller la feuille de verre du lit de rouleaux. Pour y remédier, la demande de brevet EP-A-241 355 mentionne une jupe à double paroi, les parois extérieures étant relevables pour permettre l'introduction sous la feuille de verre d'une contre-forme de pressage, mais cette dernière solution ne permet pas de travailler avec tous les types de cadres de pressage en raison de la petitesse de l'emplacement sous la jupe, petitesse qui exclut notamment la mise en oeuvre d'un procédé avec lâcher de la feuille de verre (car un tel procédé nécessite un cadre relativement grand) et par ailleurs l'absence de visibilité est toujours totale.

Il doit être enfin mentionné une troisième variante de ces techniques de formage selon laquelle la feuille de verre est soulevée et appliquée contre la forme supérieure au moyen d'un courant gazeux chaud ascendant. Mais là encore il est relativement difficile d'exercer une force suffisante pour appliquer correctement la feuille sur une surface courbe, les jets dirigés vers la partie centrale de la feuille ayant tendance en s'évacuant sur les côtés à dévier vers ces côtés les jets latéraux dirigés vers les zones marginales du vitrage, de sorte que ces jets latéraux ont une force d'impact moins grande - et de toute façon déjà amoindrie par le fait qu'ils n'agissent pas essentiellement perpendiculairement à la forme supérieure mais avec un certain angle par rapport à la normale dû au galbe de la forme supérieure.

Toutes ces approches connues de l'art donnent en pratique largement satisfaction avec la plupart des volumes usuels, mais pour ceux d'entre eux qui présentent les formes les plus compliquées, une bonne qualité n'est souvent obtenue qu'au prix de longs réglages ou de compromis techniques qui ne laissent pas à l'opérateur une liberté d'action aussi grande qu'il pourrait le souhaiter.

L'invention a pour but un procédé et un dispositif de bombage comportant une phase de prise en charge des feuilles de verre permettant à la fois l'exercice d'une force élevée au moment de l'envol, une application correcte contre une forme supérieure de bombage éventuellement très fortement galbée, l'introduction sous la forme supérieure de bombage d'outils de bombage et/ou de récupération des feuilles de verre et enfin une bonne visibilité de la feuille de verre lors de son traitement.

Ce but est atteint selon l'invention par un procédé de bombage selon lequel la feuille de verre est réchauffée en position horizontale jusqu'à l'obtention de sa température de bombage et est amenée au contact d'une forme supérieure de bombage par une force de nature pneumatique, une barrière fluidique étant générée à la périphérie de la feuille de verre, ladite barrière fluidique canalisant les gaz exerçant ladite force pneumatique et limitant les entrées d'air extérieur au voisinage de la forme supérieure de bombage.

L'invention a également pour objet le dispositif de bombage adapté à ce procédé, dispositif comprenant un four de réchauffage des feuilles de verre, un convoyeur, une station de bombage dans laquelle sont disposés une forme supérieure de bombage dont la face inférieure est tournée vers la feuille de verre et des moyens pour engendrer une force de nature pneumatique pour amener la feuille de verre au contact de ladite face inférieure. Ce dispositif comprend en outre des moyens pour générer une barrière fluidique à la périphérie de la feuille de verre.

La barrière fluidique générée juste à la périphérie de la feuille de verre - mais non en contact avec elle -constitue une sorte de jupe qui aide à la prise en charge du volume que celle-ci soit obtenue au moyen d'une aspiration au travers ou à la périphérie de la forme supérieure ou encore par un soufflage ascendant d'air chaud. Elle se substitue ainsi tout ou partie à la jupe mécanique connue de l'art dont elle assure avantageusement toutes les fonctions avec de plus l'avantage d'une parfaite transparence. Selon la difficulté de la forme de vitrage souhaitée, la hauteur de transfert vertical de la feuille de verre, la présence ou non d'autres moyens agissant sur la feuille de verre (les trois "types" de force pneumatique énoncés précédemment peuvent être en effet pour partie combinés), la barrière fluidique peut couvrir tout ou partie du périmètre de la feuille de verre. La barrière fluidique peut également être associée à une jupe très courte qui assure une faible fuite en fin d'opération de formage, la barrière fluidique servant alors essentiellement pendant la phase de décollage.

Avantageusement cette barrière fluidique est générée par des jets d'air comprimé de préférence issus d'une rampe montée solidaire de la forme supérieure de bombage, la divergence des jets au sortir de la rampe assurant la continuité de la barrière et par là son étanchéité indispensable à l'obtention d'un effet de "jupe". Il va de soi que cette barrière ne doit pas s'opposer à l'ascension de la feuille de verre ; étant donné que lors de la mise sous dépression de la chambre, les jets d'air sont attirés vers le centre, il est plus particulièrement préférable d'opérer avec des jets oblique s'écartant de la feuille de verre et qui sont ensuite rapprochés par l'effet du vide.

Selon une autre forme de réalisation de l'invention, la rampe d'air comprimé est montée fixe, encastrée dans le convoyeur à rouleaux conduisant les feuilles de verre du four à la station de bombage.

On peut également utiliser des buses à fentes formant directement une nappe d'air continue ou une lèvre montée directement sur un tube.

Le procédé selon l'invention a ceci de remarquable qu'il convient à un très grand nombre de procédés de bombage. Ainsi comme indiqué précédemment, la force pneumatique agissant sur la feuille de verre peut être due à l'aspiration périphérique de la feuille de verre, à un courant ascendant chaud ou une aspiration au travers de la forme de bombage agissant pour la suite de l'opération ou encore par une combinaison de ces moyens. Par ailleurs, on peut opérer avec une forme supérieure de bombage plane - de sorte que le bombage s'effectue par un lâcher sur une forme inférieure de bombage faisant généralement aussi fonction de cadre de trempe - ou avec une forme supérieure de bombage galbée - de sorte que tout ou partie du bombage du verre s'effectue lors de l'application contre la forme supérieure de bombage. Dans tous les cas, la barrière fluidique selon l'invention simplifie l'introduction d'un outillage du type cadre de trempe et/ou cadre de pressage sous la forme supérieure de bombage. De plus, la visibilité bien meilleure qui résulte de l'emploi d'une barrière fluidique aide à l'interprétation des phénomènes se produisant effectivement au contact de la forme supérieure de bombage ce qui permet le cas échéant une modification adéquate des réglages des outillages.

L'effet de "jupe" obtenu avec la barrière fluidique fonctionne bien sûr quelque peu différent selon la nature de la force pneumatique agissant sur la feuille de verre. Avec une aspiration, la barrière fluidique permet de définir une sorte de chambre dans laquelle est fait le vide. Avec un soufflage, la barrière fluidique va faire pour partie fonction de déflecteur en renvoyant les gaz soufflés déviés vers la feuille de verre. Mais dans tous les cas - que ce soit par la définition d'une fuite très faible autour de la feuille de verre ou la déflection des courants ascendants - la barrière fluidique selon l'invention permet une "efficacité" plus grande de la force pneumatique ce qui permet le cas échéant d'en diminuer l'intensité ; une force d'aspiration relativement faible suffit à créer une différence de pression entre les 2 faces du vitrage suffisante pour faire se soulever la feuille de verre. L'accostage de la feuille de verre contre la forme supérieure peut ainsi s'effectuer dans des conditions particulièrement douces, sans crainte d'un marquage du verre. Alors qu'avec les dispositifs connus de l'art, l'aspiration initiale doit être très forte et est ensuite réduite dans la phase de conformation du verre, avec une barrière fluidique selon l'invention, le niveau de vide nécessaire en début de processus est si faible qu'il y a au contraire avantage à augmenter la dépression en fin d'application, ce qui permet à la feuille de verre de mieux épouser les contours de la forme. Plus généralement on peut considérer la phase d'envol comme absolument non critique et choisir ensuite le niveau de dépression exclusivement en considération du formage au contact de la forme supérieure.

Un exemple tout particulièrement intéressant d'application de l'invention est celui de la fabrication de vitrages moyennement bombés qui vont tirer avantage de cette efficacité renforcée de la force pneumatique. Ainsi dans de nombreux cas, la limite au-delà de laquelle un pressage mécanique s'avère nécessaire sera un peu éloignée, le volume étant bombé simplement du fait de la force pneumatique l'appliquant contre la forme supérieure de bombage bombée.

Même si la forme n'est pas entièrement acquise du fait de cette application pneumatique, l'écart de bombage devant être rattrapé par pressage mécanique est néanmoins diminué de sorte que le pressage peut s'effectuer en conduisant à un minimum de glissement. Dans ces conditions, il est alors envisageable de procéder au léger pressage par le cadre de trempe même ce qui à l'évidence est intéressant du point de vue de la cadence de production et du coût des outillages. Dans ce cas, il importe de revêtir le cadre de trempe avec un tissu ne favorisant pas trop le marquage, tel celui enseigné par la demande de brevet européen n° 312 439.

Il a été de plus noté que ce courant d'air à grande vitesse crée un effet "venturi", la dépression ainsi générée pouvant être de l'ordre de 10 mm de colonne d'eau, chiffre à rapprocher d'une valeur de l'ordre de 15 mm de colonne d'eau nécessaire pour soulever la feuille de verre, cette dépression contribue ainsi à l'envol et à l'allègement du volume lors de la phase de centrage qui précède généralement l'aspiration. Pour bénéficier de cet allègement lors du centrage, la barrière fluidique est générée avant que ne débute l'intervention des moyens pneumatiques d'aspiration et de soufflage, dès que la feuille de verre a pénétré dans l'espace situé sous la forme.

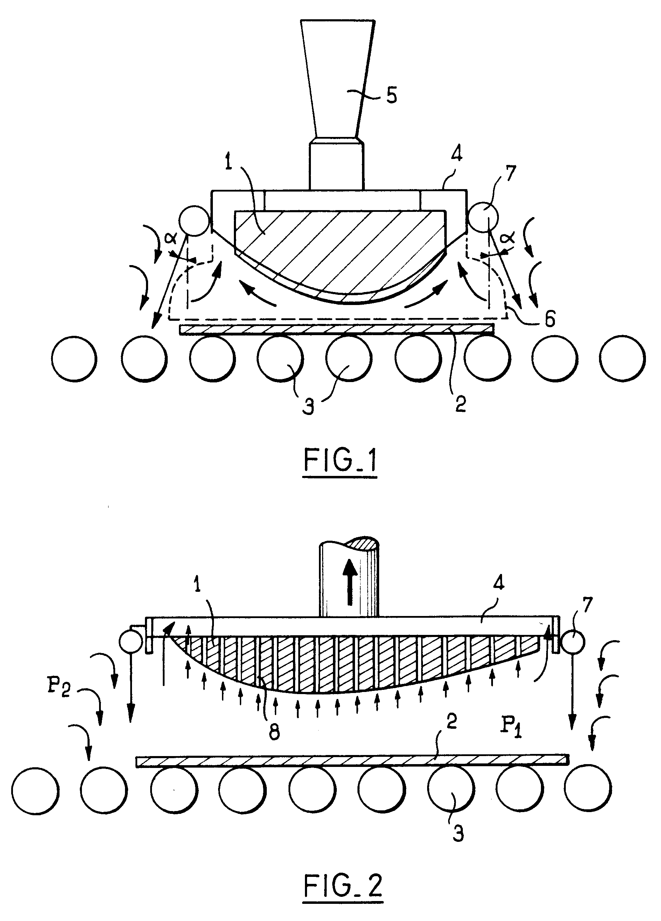

D'autres détails et caractéristiques avantageuses de l'invention ressortent de la description ci-après en référence aux dessins annexés qui représentent :
. **figure 1** : un schéma en vue de côté d'une installation de bombage-trempe avec une forme de bombage supérieure entourée par une barrière fluidique,
. **figure 2** : un schéma d'une forme de bombage aspirante à aspiration assistée par une barrière fluidique selon l'invention.

La figure 1 montre les éléments caractéristiques de la cellule de bombage d'une installation de bombage-trempe opérant essentiellement suivant le principe du brevet FR-B-2 085 464. De manière bien connue et de ce fait ici non représenté, les feuilles de verre sont chargées à l'entrée d'un four électrique sur un convoyeur à rouleaux qui se prolonge à la sortie du four. La course des feuilles de verre est stoppée sous une forme supérieure de bombage, cet arrêt s'effectuant généralement en coopération avec des moyens de centrage. La forme supérieure de bombage 1 est dans le cas d'exemple ici choisi constituée par une tôle fortement galbée correspondant à la forme que l'on souhaite conférer à la feuille de verre 2 amenée par les rouleaux 3. La forme supérieure de bombage 1 est disposée dans un caisson sans fond 4 dont les parois latérales forment une jupe qui entoure la forme supérieure 1 de manière à définir autour de celle-ci un espace de fuite lorsque le caisson 4 est mis en dépression au moyen de la trompe 5 et à générer une force d'aspiration.

Pour faire se soulever la feuille de verre et l'appliquer contre la forme supérieure de bombage, il est nécessaire que la force d'aspiration soit maximale au moment de l'envol et pour l'application finale des parties les plus galbées.

Selon le brevet FR-B-2 085 464, ceci est obtenu grâce à l'utilisation d'une jupe profilée "longue" ici représentée en pointillés 6. Comme expliqué précédemment cette jupe longue 6 constitue un obstacle difficilement contournable qui gène par son seul encombrement physique. De plus tous les types de cadre de pressage ne peuvent se loger à l'intérieur d'une telle jupe. La solution proposée dans le mode de réalisation de l'invention représenté figure 1 consiste dans une jupe très courte, dont les dimensions sont idéales en fin d'application contre la forme supérieure de bombage, doublée d'une barrière fluidique.

La barrière fluidique est ici générée par une rampe 7 alimentée en air comprimé et munie d'une série d'orifices. Avantageusement on utilise un système petit débit-grande vitesse. D'autre part, pour tenir compte de l'effet d'attraction du vide, la barrière fluidique est initialement dimensionnée un peu plus grande que la feuille de verre, l'angle d'ouverture α étant par exemple compris entre 15 et 25° ou même plus.

Le perçage de la rampe est optimisé pour remplacer une hauteur de la jupe "longue" fictive remplacée par la barrière fluidique, et dépend de plus de la pression d'air comprimé. A titre indicatif, on a substitué une jupe de 100 mm de hauteur par une barrière fluidique obtenue à partir d'une rampe alimentée sous une pression de 5 bars (5 10⁵ PA), percée de 200 trous de 1 mm de diamètre disposés selon un pas constant de 5 mm. Si on souhaite remplacer une jupe de 40 mm, on pourra soit travailler avec une pression d'alimentation inférieure, soit espacer un peu plus les trous qui pourront être compris par exemple entre 7 et 10 mm, sans excéder trop cette dernière valeur car alors les espaces entre deux jets adjacents sont assez larges pour laisser passer des courants d'air induits. Des pressions d'alimentation en air comprimé supérieures à 5 bars peuvent être utilisées et autorisent éventuellement des perçages plus espacés. Dans ces buts, il est avantageux de disposer de moyens pour faire varier la pression d'air comprimé soufflé.

Il est à noter que la rampe peut ne recouvrir qu'une partie du périmètre de la feuille de verre, et n'être placée par exemple qu'en regard des endroits où la distance à parcourir par la feuille de verre est la plus importante.

La rampe 7 est de préférence montée directement sur le caisson dépressurisé 4 et est solidaire des mouvements de montée-baisse du caisson. Pour cela le raccordement avec le circuit central d'air comprimé s'effectue par exemple au moyen d'un tube flexible. Il est à noter qu'étant donné les faibles débits d'air comprimé projetés et le fait que ces jets ne sont jamais dirigés vers la feuille de verre, il n'est pas nécessaire que l'air soit préchauffé à la température de bombage. Toutefois pour ne pas perturber l'équilibre thermique de la station de bombage et éviter de refroidir la feuille de verre toute proche, il est préférable de prévoir au moins un préchauffage par exemple en faisant passer les canalisations d'alimentation par le four de réchauffage des feuilles de verre. D'autre part, la rampe est de préférence disposée de manière à ce que la barrière fluidique constitue une véritable continuation du caisson sans fond, interdisant la pénétration d'air induit entre la rampe et le caisson.

Dans une variante de réalisation de l'invention, la rampe d'air comprimé est en position fixe encastrée dans le convoyeur. Cette disposition n'est toutefois pas préférée, car il est alors plus difficile d'obtenir que la barrière fluidique prolonge de façon relativement étanche le caisson sans fond.

Dans l'exemple de réalisation de la figure 1, la force pneumatique qui agit sur la feuille de verre est exclusivement due à l'aspiration périphérique. Toutefois, l'invention n'est pas limitée à ce premier type de procédé de formage et la force pneumatique peut être notamment générée en totalité ou en partie par une aspiration par la forme supérieure elle-même, percée d'orifices de succion 8, comme on peut le voir figure 2. Dans ce cas la barrière fluidique selon l'invention contribue à affaiblir la valeur de la pression P₁ sous la forme supérieure de bombage par rapport à la pression extérieure P₂, ceci en s'opposant à la pénétration de courants d'air induits. De ce fait, l'envol de la feuille de verre s'effectue beaucoup plus facilement.

Comme il ressort des figures 1 et 2, la feuille de verre reste parfaitement visible pendant toute la durée de son application contre la forme supérieure de bombage. D'autre part l'espace situé sous et à côté de la feuille de verre est parfaitement dégagé, ce qui permet l'introduction de n'importe quel type d'outillage et notamment de cadres de pressage ou de trempe.

## Revendications

1. Procédé de bombage d'une feuille de verre (2) selon lequel la feuille de verre (2) est réchauffée en position horizontale jusqu'à l'obtention de sa température de bombage et est amenée au contact d'une forme supérieure de bombage (1) par une force de nature pneumatique, **caractérisé en ce que** l'on génère une barrière fluidique à la périphérie de la feuille de verre (2), ladite barrière fluidique limitant les entrées et sorties d'air à proximité de la forme supérieure de bombage (1).

2. Procédé de bombage selon la revendication 1, **caractérisé en ce que** la force de nature pneumatique est obtenue par une aspiration au travers de la forme supérieure (1).

3. Procédé de bombage selon la revendication 1 ou 2, **caractérisé en ce que** la force de nature pneumatique est obtenue par une aspiration à la périphérie de la feuille de verre (2).

4. Procédé de bombage selon l'une des revendications 1 à 3, **caractérisé en ce que** la force de nature pneumatique est obtenue par un soufflage ascendant d'air chaud.

5. Procédé de bombage selon l'une des revendications précédentes, **caractérisé en ce que** l'intensité de la force pneumatique est accrue lorsque le verre entre en contact avec la forme supérieure (1).

6. Procédé de bombage selon la revendication 1 à 5, **caractérisé en ce que** ladite barrière fluidique est obtenue par des jets d'air soufflés à grande vitesse.

7. Procédé de bombage selon la revendication 6, **caractérisé en ce que** lesdits jets sont obliques.

8. Procédé de bombage selon la revendication 6 ou 7, **caractérisé en ce que** lesdits jets sont descendants.

9. Procédé selon l'une des revendications précédentes, **caractérisé en ce que** la barrière fluidique est générée également pendant la phase de centrage de la feuille de verre (2) sous la forme supérieure de bombage (1).

10. Procédé de bombage selon l'une des revendications précédentes, **caractérisé en ce que** la barrière fluidique recouvre une partie seulement du périmètre de la feuille de verre (2) à bomber.

11. Dispositif de bombage d'une feuille de verre (2) comportant un four de réchauffage des feuilles de verre (2), un convoyeur (3), une station de bombage dans laquelle sont disposés une forme supérieure de bombage (1) dont la face inférieure est tournée vers la feuille de verre (2) et des moyens pour engendrer une force de nature pneumatique pour amener la feuille de verre au contact de ladite face inférieure, **caractérisé par** des moyens (7) pour générer une barrière fluidique à la périphérie de la feuille de verre (2).

12. Dispositif de bombage selon la revendication 11, **caractérisé en ce que** lesdits moyens sont constitués par des rampes (7) alimentées en air comprimé et munies d'orifices.

13. Dispositif de bombage selon la revendication 12, dans lequel la forme supérieure de bombage (1) est montée dans un caisson sans fond (4), **caractérisé en ce que** les rampes (7) sont fixées sur le caisson (4).

14. Dispositif de bombage selon la revendication 13, **caractérisé en ce que** les rampes (7) sont encastrées dans le convoyeur (3).

15. Dispositif selon l'une des revendications 11 à 14, **caractérisé en ce que** des moyens sont prévus pour modifier la pression d'air comprimé.

16. Dispositif selon l'une des revendications 11 à 15, **caractérisé en ce que** la rampe (7) est alimentée sous une pression d'air comprimé supérieure ou égale à 5 bars avec un perçage à un pas inférieur à 10 mm.

## Claims

1. Process for bending a glass sheet (2) according to which the glass sheet (2) is heated in the horizontal position until its bending temperature is reached and is brought into contact with an upper bending mould (1) by a pneumatic force, characterized in that a fluid barrier is produced on the periphery of the glass sheet (2), said fluid barrier limiting entrance and exists of air in the vicinity of the upper bending mould (1).

2. Bending process according to claim 1, characterized in that the pneumatic force is obtained by suction through the upper mould (1).

3. Bending process according to claim 1 or 2, characterized in that the pneumatic force is obtained by suction on the periphery of the glass sheet (2).

4. Bending process according to any one of the claims 1 to 3, characterized in that the pneumatic force is obtained by rising hot air blowing.

5. Bending process according to any one of the preceding claims, characterized in that the intensity of the pneumatic force is increased when the glass comes into contact with the upper mould (1).

6. Bending process according to any one of the claims 1 to 5, characterized in that the fluid barrier is obtained by air jets blown at high speeds.

7. Bending process according to claim 6, characterized in that the said jets are oblique.

8. Bending process according to claim 6 or 7, characterized in that the said jets are downwardly directed.

9. Process according to any one of the preceding claims, characterized in that the fluid barrier is also generated during the phase of centering the glass sheet (2) beneath the upper bending mould (1).

10. Bending process according to any one of the preceding claims, characterized in that the fluid barrier only covers part of the perimeter of the glass sheet (2) to be bended.

11. Apparatus for bending a glass sheet (2) having a glass sheet heating furnace, a conveyor (3), a bending station in which is provided an upper bending mould (1), whose lower face is turned towards the glass sheet (2) and means for producing a pneumatic force for bringing the glass sheet into contact with said lower surface, characterized by means (7) for producing a fluid barrier on the periphery of the glass sheet (2).

12. Bending apparatus according to claim 11, characterized in that the said means are constituted by systems (7) supplied with compressed air and provided with orifices.

13. Bending apparatus according to claim 12, wherein the upper bending mould (1) is fitted in a bottomless chamber (4), characterized in that the systems (7) are fixed to the chamber (4).

14. Bending apparatus according to claim 13, characterized in that the systems (7) are embedded in the conveyor (3).

15. Apparatus according to any one of the claims 11 to 14, characterized in that means are provided for modifying the compressed air pressure.

16. Apparatus according to any one of the claims 11 to 15, characterized in that the system (7) is supplied with a compressed air pressure equal to or above 5 bars with perforations having a spacing smaller than 10mm.

## Patentansprüche

1. Verfahren zum Biegen einer Glasscheibe (2), in welchem die Glasscheibe (2) in horizontaler Position bis zur Erreichung ihrer Biegetemperatur erhitzt und durch eine pneumatisch wirkende Kraft mit einer oberen Biegeform (1) in Berührung gebracht wird, **dadurch gekennzeichnet, daß** man am Umfang der Glasscheibe (2) einen fluidischen Schutz erzeugt, welcher in der Nähe der oberen Biegeform (1) den Zutritt und das Ausströmen von Luft begrenzt.

2. Biegeverfahren nach Anspruch 1, **dadurch gekennzeichnet, daß** die pneumatisch wirkende Kraft mittels Ansaugen durch die obere Form (1) erhalten wird.

3. Biegeverfahren nach Anspruch 1 oder 2, **dadurch gekennzeichnet, daß** die pneumatisch wirkende Kraft durch Ansaugen am Umfang der Glasscheibe (2) erhalten wird.

4. Biegeverfahren nach einem der Ansprüche 1 bis 3, **dadurch gekennzeichnet, daß** die pneumatisch wirkende Kraft durch ein aufsteigendes Einblasen von Heißluft erhalten wird.

5. Biegeverfahren nach einem der vorhergehenden Ansprüche, **dadurch gekennzeichnet, daß** sich die Stärke der pneumatischen Kraft vergrößert, wenn das Glas mit der oberen Form (1) in Berührung kommt.

6. Biegeverfahren nach Anspruch 1 bis 5, **dadurch gekennzeichnet, daß** der fluidische Schutz durch Luftstrahlen erhalten wird, die mit hoher Geschwindigkeit eingeblasen werden.

7. Biegeverfahren nach Anspruch 6, **dadurch gekennzeichnet, daß** die Strahlen schräg stehen.

8. Biegeverfahren nach Anspruch 6 oder 7, **dadurch gekennzeichnet, daß** die Strahlen absteigend strömen.

9. Verfahren nach einem der vorhergehenden Ansprüche, **dadurch gekennzeichnet, daß** der fluidische Schutz auch während der Phase des Zentrierens der Glasscheibe (2) unter der oberen Biegeform (1) erzeugt wird.

10. Biegeverfahren nach einem der vorhergehenden Ansprüche, **dadurch gekennzeichnet, daß** der fluidische Schutz nur einen Teil des Umfangs der zu biegenden Glasscheibe (2) bedeckt.

11. Vorrichtung zum Biegen einer Glasscheibe (2), die einen Erwärmungsofen für die Glasscheiben (2), einen Förderer (3) und eine Biegestation umfaßt, in welcher eine obere Biegeform (1), deren Unterseite zur Glasscheibe (2) gerichtet ist, und Mittel zum Ausüben einer pneumatisch wirkenden Kraft, um die Glasscheibe mit dieser Unterseite in Berührung zu bringen, angeordnet sind, **gekennzeichnet durch** Mittel (7) zur Erzeugung eines fluidischen Schutzes am Umfang der Glasscheibe (2).

12. Biegevorrichtung nach Anspruch 11, **dadurch gekennzeichnet, daß** die Mittel aus mit Druckluft versorgten Rohren (7) bestehen, die mit Öffnungen versehen sind.

13. Biegevorrichtung nach Anspruch 12, in welcher die obere Biegeform (1) in einem Kasten (4) ohne Boden angebracht ist, **dadurch gekennzeichnet, daß** die Rohrdüsen (7) am Kasten (4) befestigt sind.

14. Biegevorrichtung nach Anspruch 13, **dadurch gekennzeichnet, daß** die Rohrdüsen (7) in den Förderer (3) versenkt eingebaut sind.

15. Vorrichtung nach einem der Ansprüche 11 bis 14, **dadurch gekennzeichnet, daß** Mittel zur Veränderung des Drucks der Druckluft vorgesehen sind.

16. Vorrichtung nach einem der Ansprüche 11 bis 15, **dadurch gekennzeichnet, daß** die Rohrdüse (7) Bohrungen aufweist, deren Abstand kleiner als 10 mm ist, und mit Druckluft versorgt wird, deren Druck mindestens 5 bar beträgt.
